# EUROPEAN PATENT SPECIFICATION

(11) **EP 2 482 152 B1**
(45) Date of publication and mention of the grant of the patent: **15.05.2019**
(21) Application number: 12152110.8
(22) Date of filing: 23.01.2012
(51) Int. Cl.: G05B 19/042

(54) **Method for use in installing a home automation system, computer medium and computer program**
Verfahren zur Gebrauch bei der Installation eines Hausautomatisierungssystems, eines Computer Mediums und eines Computerprogramms
Méthode, programe d'ordinateur et son support d'enregistrement pour installer un système de domotique

(30) Priority: 28.01.2011 BE 201100053
(43) Date of publication of application: 01.08.2012
(73) Proprietor: Niko NV, 9100 Sint-Niklaas (BE)
(72) Inventor: Daniels, Mieke, 2200 Herentals (BE); Denul, Jurgen, 9800 Deinze (BE); Leroy, Pascal, 9921 Vinderhoute (BE); Plas, Jurgen, 9800 Deinze (BE); Vehent, Peter, 9160 Lokeren (BE)
(74) Representative: D'Halleweyn, Nele Veerle Trees Gertrudis

(56) References cited:
- EP-A1- 2 098 926
- EP-A1- 2 098 928
- EP-A1- 2 180 388
- WO-A2-02/058030
- DE-A1-102004 005 219
- DE-A1-102004 005 962
- US-A1- 2004 143 428

## Description

The present invention relates to a method for preparing or completing an installation of an automation or home automation system in a building or the like. The invention further relates to a computer program for use in performing such a method and a computer medium for storing program instructions of such a computer program.

An automation system is typically a system designed for operating a number of devices by means of modules on a module assembly site, typically in at least one control box or by using modules distributed within the automation system and by means of operating means such as a button or a sensor. These operating means are typically provided with an IP address and arranged to communicate via a communication system, such as a bus, but it could also be a wireless communication system. The devices are electrical loads which are typically not provided with intelligence. According to the methods of the prior art, one usually starts thinking starting from the control box. This means that initially the necessary components will be provided in the control box and from there the necessary connections with the equipment and operating means are realized. Also, in the computer programs used to program a home automation system, one may start from the virtual control box from where virtual links are realized with the equipment and operating means. A computer program used to program an industrial automation system is disclosed in EP2098926.

The present invention aims to provide a method of the type mentioned in the introduction which is more user-friendly, and allows to install in a more organized way an automation or home automation system.

To this end, the method according to the invention is characterized in that it includes:
- providing on a display to a user an input screen with input functionalities for virtually entering a number of rooms of the building and for virtually adding to each room on the one hand devices and on the other hand operating means thereof;
- providing on a display to the user a linking functionality for creating a virtual link between one or more added operating means and one or more added input devices;
- automatically reading the devices added by the user and automatically selecting those devices which need to be connected with a module on the module assembly site, typically in the at least one control box or module distributed within the automation system. Note that the operating means typically do not require a connection with a module in the module assembly site. In the event that this is the case anyway, one may also select the appropriate operating means according to the method according to the invention.

In the context of the present invention, the expression "home automation system" is to be understood to comprise both a domestic automation system as an automation system in an industrial building. More generally, a home automation system in any building may be provided with electrical devices.

The method according to the invention does not depart from the control box but from virtually providing devices and operating means in virtual rooms of a building and creating virtual links between them. This will allow a user, typically an installer, to first determine which devices and operating means he desires in the building and then proceeds to determining the elements needed in the module assembly site and to the programming thereof, see below.
According to a preferred embodiment, creating a link between one or more added operating means and/or sensors and one or more added devices comprises defining the behaviour of the one or more linked devices depending as function the status of the one or more operating means. This allows a user to determine what a device is supposed to do the moment a operating means measures or detects a particular input, for example, pressing a button, measuring a certain temperature, the measurement of a movement, etc.

According to a preferred embodiment, offering to the user the linking functionality, comprises providing an input screen for inputting one or more conditions to define the behaviour. For such a behaviour could only need to take place in a certain time period, for example during daytime, or if another device is in a particular status. Other criteria, for example, could be the intensity of the light or the intensity of the wind measured by a operating means, and hence, a condition could use, for example, time, light intensity and wind intensity. If the one or more conditions are not met, optionally any other behaviour can be defined. According to a preferred embodiment, one condition is used and a first behaviour can be defined if the condition is met, and optionally a second behaviour can be defined if the condition is not met.

According to an preferred embodiment, the method further comprises offering to the user an input screen with input functionalities for adding a number of modules designed to be installed on the module assembly site, typically in the at least one control box or distributed in the system. Preferably, the user is further offered an input screen with input functionalities for creating a link between an added module and one or more selected devices.

According to another embodiment, the method further comprises automatically determining a number of modules for installation on the module assembly site, typically in the control box, based on the selected devices. In this way, a user does no longer need to choose for himself the appropriate modules, but they are automatically installed in the virtual module assembly site. The method may further comprise automatically creating a link between a particular module and one or more selected devices. In this way, the user is provided with a complete floor plan of the module assembly site based on the devices and connection means provided by him.

According to a preferred embodiment, the method further comprises the physical installation of the added operating means and devices. Next, the modules in the module assembly site can physically be mounted based on the automatically determined or added number of modules and the modules can be electrically connected to each of the selected devices based on the determined or added virtual links between a module and one or more selected devices.

Each operating means and each module typically has a digital address, for example an IP address, and is able to communicate with one or more controllers or control units on the module assembly site by means of a communication system or distributed within the system, typically a bus, for example, a 2-wire non-polarized bus. Hence, the method may comprise providing on a display to a user an input screen with input functionalities for entering the operating means and modules, and for reading out the digital addresses thereof, and for storing the digital addresses read out for use by one or more controllers, centrally or decentrally installed. After entering of the virtual rooms with devices, operating means and links between them, after constructing the virtual module assembly site, and after the physical installation thereof, one can subsequently read out the addresses of the operating means and modules with the method according to the invention. According to another embodiment, one can manually retype the addresses of the elements of the physical installation under construction to construct it afterwards.

According to the preferred embodiment, providing on a display an input screen with input functionalities for entering a number of rooms of the building, comprises providing a graphical interface wherein the user is able to draw a floor plan of the building using lines and/or shapes. This will further improve the ergonomics of the method. Providing on a display an input screen with input functionalities for adding to each room on the one hand devices and on the other hand operating means thereof consists preferably of providing the possibility to place icons for these devices and operating means on the floor plan.

The devices may include one or more of the following: a dimmer switch, a shutter, a controllable thermostatic valve, a fan, a lamp.

The operating means may include one or more of the following: a single or multiple control, such as a single or multiple button, a shutter control, a thermostat, a display screen with buttons, a sensor, a touch screen, a smart phone, etc..

The modules may include one or more of the following: a controller, a power supply, a switching device, a dimmer module, a fan module, a heating module and they can be centrally installed or distributed within the automation system.

The invention further provides a computer medium for storing program instructions for use in performing an embodiment of a method as described above.

The invention also relates to a computer program for use in performing an embodiment of a method as described above.

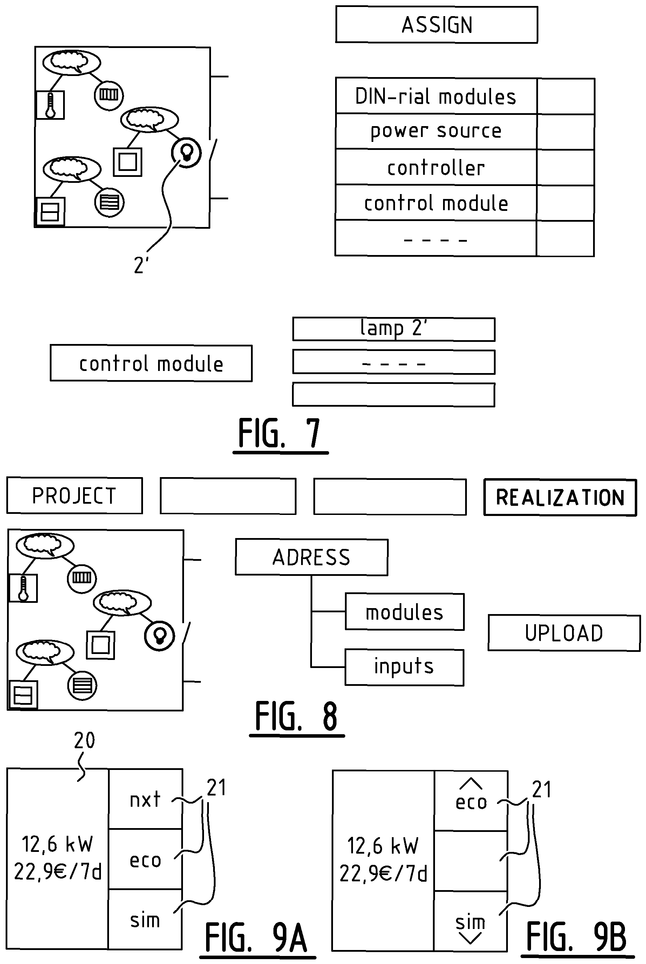

Finally, the invention relates to an automation system with one or more controllers or controller units, centrally or decentrally in the automation system for controlling operating means and control box modules; a measuring module for measuring the instantaneous electrical power consumption in at least one circuit, an operating means with a display screen and at least one button. The operating means is arranged to receive and display on the display screen the measured electrical power consumption. The one or more central or decentralized controllers are arranged to control - after pressing a button on the operating means - certain other operating means and/or control box modules of the automation or home automation system in a programmed way. The invention also relates to such an operating means *per se* and the use thereof in an automation system as described above. Such an operating means has the advantage that a user is able to immediately perceive - when pressing a button - the effect on the electrical power consumption in the least one circuit. Preferred additional measures of such operating means are described below with reference to Figure 9A and 9B and the skilled person will understand that these additional measures may individually be combined with the operating means described in this paragraph.

The present invention will be illustrated by means of a by no means limiting embodiment of the method and computer program according to the invention with reference to the attached drawings. The drawing shows:
In Figure 1, a schematic representation of the display when starting up an embodiment of the computer program according to the invention;
In Figure 2, a schematic representation of the display after selecting the "PROJECT" tab of Figure 1;
In Figure 3, a schematic representation of the display after selecting the "PLAN" tab of Figure 2;
In Figure 4, a schematic representation of the display after selecting the "CREATE" tab of Figure 1, after adding a number of inputs, outputs and actions;
In Figure 5A, a schematic representation of the display after selecting the "ADD INPUT" tab of Figure 4;
In Figure 5B, a schematic representation of the display after selecting the "ADD OUTPUT" tab of Figure 4;
In Figure 5C, a schematic representation of the display after selecting the "ADD ACTION" tab of Figure 4, also displaying a number of submenus;
In Figure 6, a schematic representation of the display after selecting the "BOX CONSTRUCTION" tab of Figure 1;
In Figure 7, a schematic representation of the display after selecting the "ASSIGN" tab of Figure 6, after assigning an output to a module and a schematic representation of a portion of the display after selecting the switch module;
In Figure 8, a schematic representation of the display after selecting the "CREATE" tab of Figure 1;
In Figure 9, a schematic view of an embodiment of a preferred operating means according to the invention.

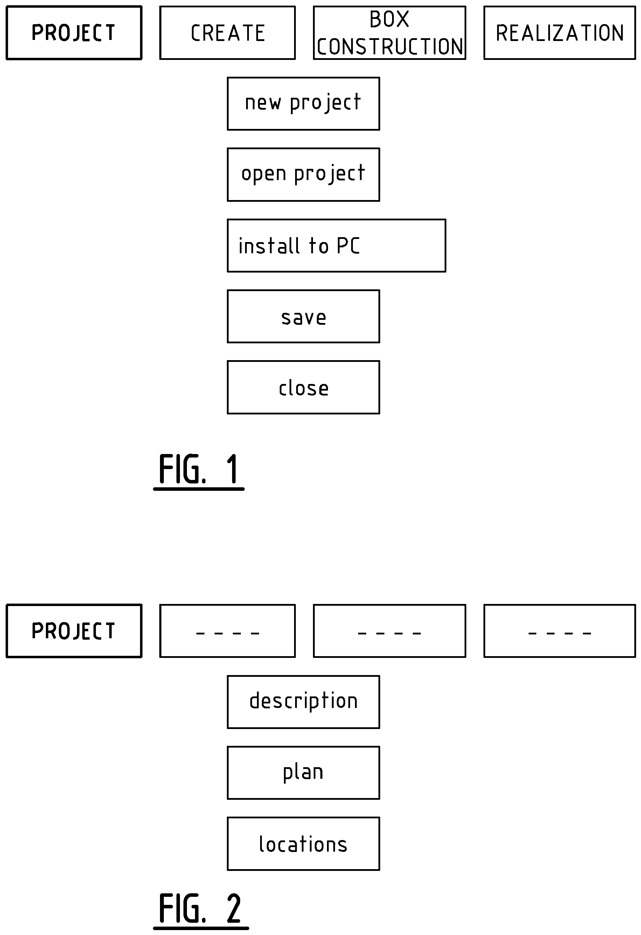

An embodiment of the method according to the invention is designed to prepare the installation of an automation or home automation system in a building, typically a house or similar. Note that the method can be used as a tool when the electrical devices and circuits have already been installed partially or in full or when the installation is yet to take place or when certain devices and/or operating means need to be added. Figure 1 illustrates a schematic screen display after starting up an embodiment of the program according to the invention and after selecting a "PROJECT" tab. This display gives a user, typically an installer, the possibility to start a new project, to open an existing project, to save a program, to close the program, to read into a PC a project file saved on a controller, etc.

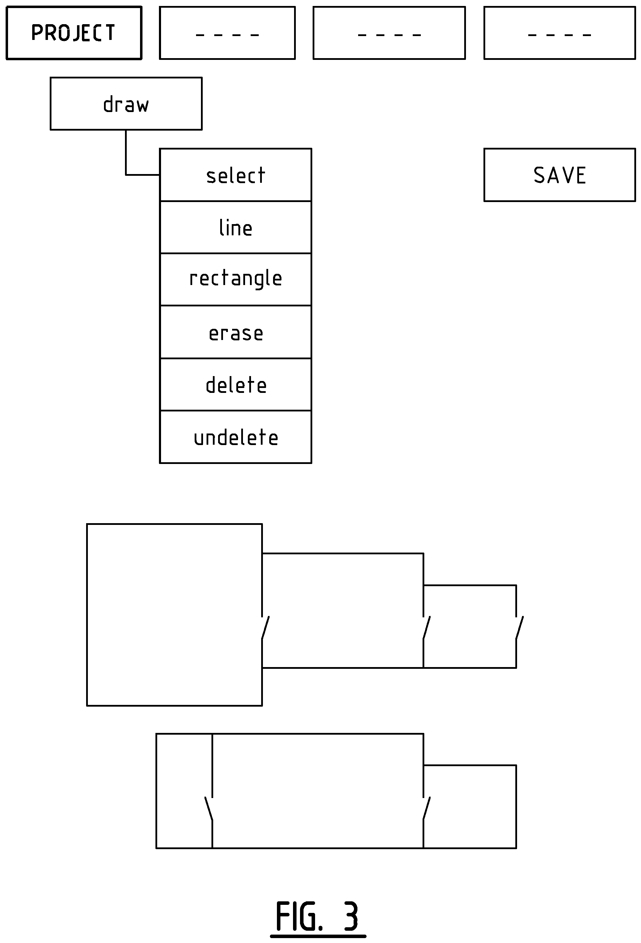

When a new project is selected, a screen will appear, such as illustrated in Figure 2. Here, the user is offered the possibility to add a brief description of the project, see "DESCRIPTION" tab in Figure 2. When a user selects the "PLAN" tab, the user is offered an input screen with input functionalities for virtually entering a number of rooms of the building, as illustrated in Figure 3. For drawing a floor plan of a floor of the building or of several floors of the building, a number of input functionalities may be offered to the user, such as drawing a line, drawing a rectangle, deleting a line or a rectangle, erasing part of a line or a rectangle, undeleting a certain action, etc. This allows a user to, for example, represent doorways and windows. According to a non-illustrated embodiment, a user may also be offered the possibility to import the floor plan of a house into the program. Subsequently, the designed or imported floor plan may be saved, after which a user can proceed to the next step by selecting the "CREATE" tab.

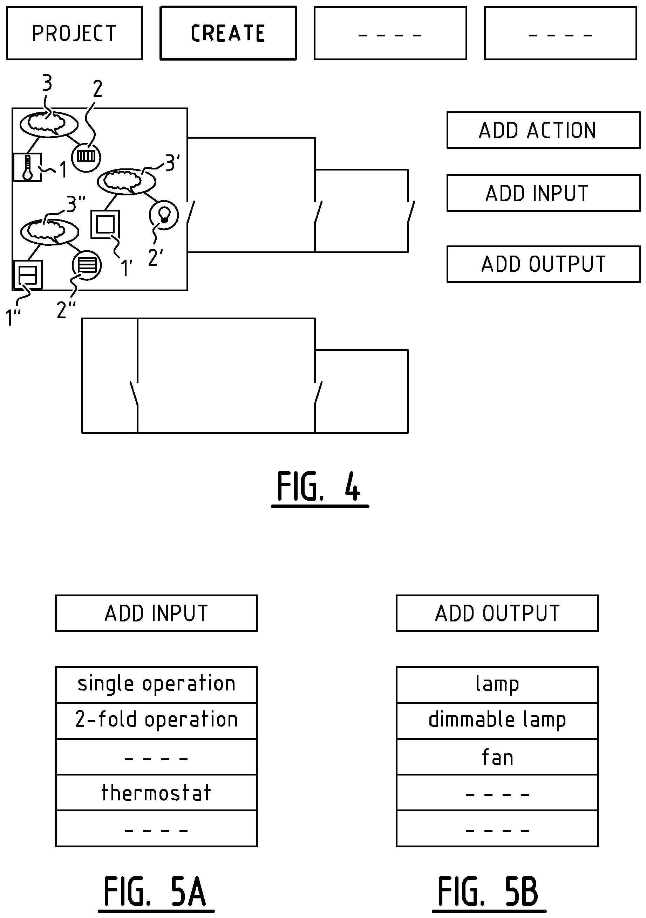

An example of a display screen after selecting the "CREATE" tab is schematically illustrated in Figure 4. Figure 4 shows in a room of the floor plan a number of inputs 1, 1', 1", a number of outputs 2, 2', 2" and a number of actions, but the skilled person will understand that when the "CREATE" tab is selected for the first time, this room is still empty. The input screen of Figure 4 offers the user the possibility to virtually add an operating means (input) and a device (output) .

By clicking on the "ADD INPUT" tab, the user is presented, for example, with the list as illustrated in Figure 5A, from which the user may select an operation means or input. Operating means include, for example, a single or multiple operating means such as a single or multiple button, a shutter control, a thermostat, a display screen with buttons, a sensor, a touch screen, a smart phone, etc. Analogously, by selecting the "ADD OUTPUT" tab, a user may add one or more outputs or devices to a room. Figure 5B illustrates a list of possible devices, the list comprising for example a lamp, dimmable lamp, a lamp with a dimmer switch, a shutter, a fan, a controllable thermostatic valve, etc.. The operating means and inputs are means that are provided with a digital address, for example an IP address, allowing them to communicate with one or more controllers on a module assembly site or in the automation system. Hence, a single or multiple push button will be arranged to send a specific IP address when the button is pressed. Analogously, a motion sensor is arranged to transmit its address the moment a motion is being detected, or a light sensor can be arranged to transmit its IP address in function of the detected amount of light. In addition to transmitting their IP address, such operating means may also be arranged to transmit certain measurement data to one or more controllers on the module assembly site or in the automation system. A device or output is typically a device without intelligence, such as a lamp or a fan intended to be connected to a corresponding module in the module assembly site, which module is addressable.

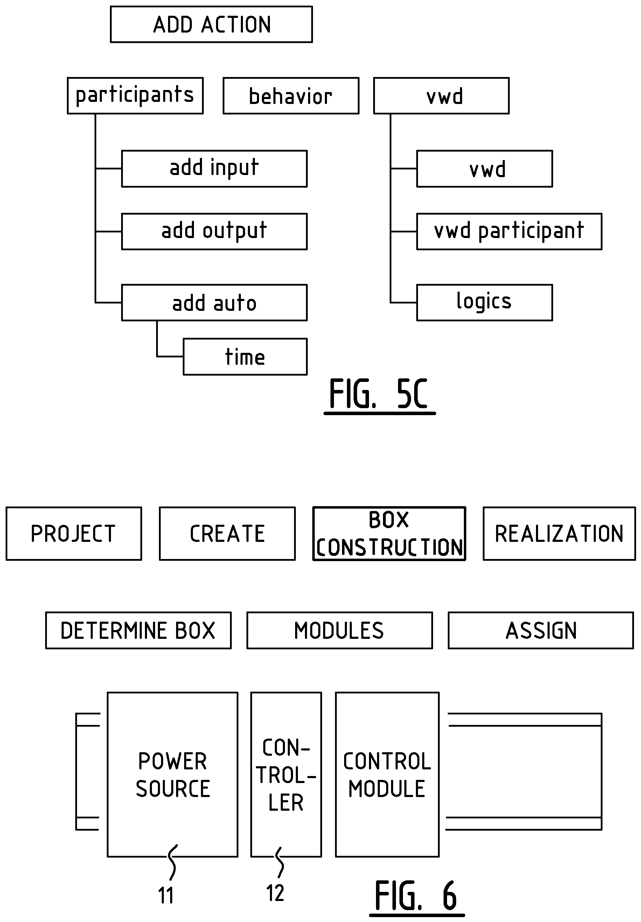

After entering the operating means (hereinafter also called inputs) and devices (hereinafter also called outputs), a user may virtually link one or more inputs with one or more outputs using the "ADD ACTION" tab, to define the behaviour of a device as a function of the status of one or more operating means linked therewith, wherein the user is given the possibility to incorporate additional conditions. An example of an input screen is schematically illustrated in Figure 5C. In a first menu "PARTICIPANTS" a user may add one or more inputs and one or more outputs to an action or a link. Furthermore, some form of automation may be added wherein, for example, a start and end time may be set for a certain action. In a next menu "BEHAVIOR", the basic behaviour of the added devices or outputs can be set. For a lamp, the basic behaviour may, for example, consist in that the lamp lights up the moment the action is started and dims the moment the action stopped. In a further menu "CONDITION", additional conditions may be linked to the action. Herein, one may specify that the action applies only during a certain time period, for example during winter, or the action may be linked to the status of certain devices that may or may not be linked to the action. Furthermore, it is possible to define an abnormal behaviour in the event that the condition is not met. For example, one can specify that an action is performed according to a first behaviour if the light in an adjacent room is out, and according to a second behaviour if the light in an adjacent room is on. Note that it is possible to add devices in different rooms to the same action, and that not all devices need to appear in both behaviours.

After entering all operating means and devices, and after entering the desired actions, a user can proceed with planning the construction of the control box by selecting the "BOX CONSTRUCTION" tab as illustrated in Figure 6. In a first menu "DETERMINE BOX", a certain type of box may be chosen. According to a preferred embodiment, a power module 11 and a controller module 12 are automatically provided in the virtual control box, as illustrated in Figure 6. In the menu "MODULES" the user may further complete the control box with additional modules. According to a possible option, completing the control box may also be done automatically, wherein, based on the added devices, the program determines which modules are needed in the control box. Note that it is preferred to offer to a user the possibility to be able to change a auto-filled virtual control box, taking into account, for example, future extensions. In the event the control box with modules has already been installed, it will be preferred to add the modules manually in the order the modules are mounted in the control box. Subsequently, in the "ASSIGN" menu, a user may virtually connect certain devices to the added modules. This is illustrated in Figure 7. The program is designed to automatically read the devices entered by the user and to automatically select the connected devices thereof which need to be linked with a module in the control box. Hence, the program knows which devices should be linked with a module and a user will only be able to select these devices in the floor plan, see Figure 7 wherein the lamp 2' is selected by a user after clicking on the switch module. In an analogous manner, for example, a dimmable lamp or a lamp with dimmer can be linked with a dimmer module, a fan with a fan module, etc.

After performing the virtual creation and virtual box construction, and after actually installing the various operating means and devices, and after actually mounting the various modules in the control box based on the virtual plan of the control box that was generated as mentioned above, one may proceed to the actual programming of the controller in the control box. To this end, a user may select the "REALIZATION" tab, as illustrated in Figure 8. Herein, in a first step, the IP addresses of the modules and the inputs are read. This may conveniently be realised by entering the inputs in a convenient order to enter and subsequently operate them in this order, such that the inputs transmit their respective IP addresses in this order to the controller which needs to be connected during the construction stage with the computer on which the program is installed. According to an embodiment thereof, the IP addresses may be entered manually. After reading or manually entering the addresses, programming the controller may be effected. This may require the user to select an "UPLOAD" menu in the display screen illustrated in Figure 8.

Another preferred embodiment of a possible operating means will now be described with reference to Figure 9A. It concerns a display screen 20 that is integrated into a housing provided with a number of buttons 21, in the illustrated example three buttons called "nxt", "eco" and "sim". The "eco" button will allow a user with one push of a button to switch over to an efficient energy consumption wherein, for example, all lights and circuits of a house are switched off. For example, also the ventilation and heating can be set to a lower level using the "eco" button.

Furthermore, the controller may be programmed such that pushing the "sim" button activates a presence simulation when a resident, for example, is absent or on vacation. Such a presence simulation may imply that, for example, the lights are switched on and off at irregular intervals such that it appears from the outside that the house is occupied.

To draw a user's attention to its consumption, a display screen 20 is further provided showing, for example, the instantaneous main consumption of the entire house or the partial consumption of, for example, a chamber. This may be the electricity consumption only, but could also be the combined water, gas and electricity consumption. The "nxt" button may be programmed to allow a user to scroll through various display screens. In this way, the combination with the "eco" button will ensure an interaction with the user: by pressing the "eco" button, a user immediately observes a decrease in consumption. To measure the instantaneous electricity consumption, for example, use can be made of a device as described in the patent application on behalf of Applicant entitled "Control box with measuring function, measuring module therefore, and home automation system comprising such a control box", which was filed on January 7, 2011 and which is herein integrally incorporated by reference. The devices and methods described in said application will allow to measure the instantaneous total electricity consumption of a house, or to measure the instantaneous consumption in a certain circuit. As is also described in said application, the measurement modules may be linked with software to display the current electricity consumption and electricity consumption as a function of time, the differences between different electricity rates (day/night) and a comparison between the different usage periods. Such information can, for example, be displayed on a touch screen, PC or a smart phone. For a smart phone, to this end, a special application can be provided. Furthermore, such an application, for example, may also permit a resident to set certain objectives in terms of its energy consumption. When the energy consumption exceeds these objectives, a user can be informed appropriately. For example, a gas and water measurement may occur based on a pulse count. To this end, custom measuring modules may be provided in the control box, which are linked with the gas meter and water meter. These modules can then in turn communicate through the communication system, typically a bus, and in particular a non-polarized 2-wire bus, with the display screen 20 to display thereon the gas and water consumption.

An embodiment of the operating means of Figure 9A is shown in Figure 9B. A first button labelled "eco" activates the eco function when held down and a scroll function for different displays of energy when pressed briefly. The middle button is a confirmation button. The third button labelled "sim" activates the sim function described above when held down and a scroll function when pressed briefly. The scroll function is meant here to scroll between the displays of energy in a reverse order compared with the scroll function of the first button. Note that still other embodiments are conceivable with more or less than three buttons that may or may not have a different function when the buttons are held down or pressed briefly.

The skilled person will appreciate that the invention is not limited to the embodiments of the method and computer program according to the invention given above and that many additions and embodiments are conceivable within the context of the invention which is only determined by the appended claims.

## Claims

1. Method for preparing or completing an installation of an automation system in a building or the like, which automation system is intended to control a number of devices (2, 2', 2") by means of operating means (1, 1', 1") and modules on a module assembly site or distributed within the automation system, which method comprises:
- providing first on a display to a user an input screen with input functionalities for virtually entering a number of rooms of the building and for virtually adding to each room on the one hand devices and on the other hand operating means (1, 1', 1") thereof;
- providing then on a display to the user a linking functionality for creating a virtual link (3, 3', 3") between one or more added operating means (1, 1', 1") and one or more added devices (2, 2', 2");
- automatically reading the devices (2, 2', 2") added by the user and automatically selecting those devices (2, 2', 2") which need to be connected with a module on the module assembly site or a module distributed within the automation system; the method further comprising:
- automatically determining a number of modules for installation on the module assembly site based on the selected devices (2, 2', 2");
wherein the devices (2, 2', 2") include one or more of the following: a dimmer, a shutter, a controllable thermostatic valve, a fan, a lamp;
wherein the operating means (1, 1', 1") comprise one or more of the following operating means (1, 1', 1"): a single or multiple control, such as a single or multiple button, a shutter control, a thermostat, a display screen with buttons, a sensor, a touch screen, a smart phone; wherein the modules for the module assembly site or the modules distributed within the automation system comprise one or more of the following modules: a controller, a power supply, a switching device, a dimmer module, a fan module, a heating module;
wherein creating the link between one or more added operating means (1, 1', 1") and one or more added devices (2, 2', 2") comprises defining the behaviour of the one or more linked devices (2, 2', 2") as a function of the status of the one or more operating means (1, 1', 1").

2. Method according to claim 1, **characterized in that** offering to the user the linking functionality, comprises providing an input screen for inputting one or more conditions to define the behaviour.

3. Method according to any one of the preceding claims, further comprising offering to the user an input screen with input functionalities for adding a number of modules designed to be installed on the module assembly site, and/or for creating a link between an added module and one or more selected devices (2, 2', 2").

4. Method according to any one of the preceding claims, further comprising automatically creating a link between a particular module and one or more selected devices (2, 2', 2").

5. Method according to any one of the preceding claims, further comprising the installation of the added operating means (1, 1', 1") and devices (2, 2', 2").

6. Method according to claim 5, further comprising mounting the modules in the module assembly site based on the determined or added number of modules and electrically connecting each of the selected devices (2, 2', 2") based on a determined or added links between a module and one or more selected devices (2, 2', 2").

7. Method according to claim 6, wherein each operating means (1, 1', 1") and each module has a digital address and is able to communicate with a controller in the module assembly site or with a controller distributed within the automation system by means of a communication system, further comprising providing on a display to a user an input screen with input functionalities for entering the operating means (1, 1', 1") and modules, and for reading out the digital addresses thereof, and for storing the digital addresses read out for use by the controller.

8. Method according to any one of the preceding claims, **characterized in that** providing on a display an input screen with input functionalities to a user for entering a number of rooms of the building, essentially comprises providing a graphical interface wherein the user is able to draw a floor plan of the building using lines and/or shapes.

9. Method according to any one of the preceding claims, **characterized in that** a screen offering an input with input features for each room adding devices (2, 2', 2") one hand and operating means (1, 1', 1") of other mainly consists of providing the opportunity to icons for these devices (2, 2', 2") and operating means (1, 1', 1") to place in the floor plan.

10. Method according to claim 1, wherein said input functionalities for virtually entering a number of rooms of the building comprise a graphical interface wherein the user is able to draw a floor plan of the building using lines and/or shapes; and wherein the possibility is offered to place icons for the devices (2, 2', 2") and operating means (1, 1', 1") on the floor plan.

11. Method according to claim 10, **characterized in that** offering to the user the linking functionality comprises providing an input screen for inputting one or more conditions to define the behaviour.

12. Computer medium having stored thereon program instructions for performing the method according to any one of the preceding claims.

## Patentansprüche

1. Verfahren zum Vorbereiten oder Abschließen einer Installation eines Automatisierungssystems in einem Gebäude oder dergleichen wobei das Automatisierungssystem ausgelegt ist, um eine Anzahl von Geräten (2, 2', 2") durch Betriebsmittel (1, 1', 1") und Module am Modulmontageort oder innerhalb des Automatisierungssystems verteilt zu steuern, wobei das Verfahren umfasst:
- zuerst bereitstellen
auf einem Display für einen Benutzer einen Eingabebildschirms mit Eingabefunktionalitäten zum virtuellen Einfügen einer Anzahl von Räumen eines Gebäudes und zum virtuellen Hinzufügen von einerseits Geräten und andererseits Handbetriebsmitteln (1, 1', 1") davon;
- anschließend bereitstellen
auf einem Display an den Benutzer eine Verknüpfungsfunktionalität zum Erstellen einer virtuelle Verknüpfung (3, 3', 3") zwischen einem oder mehreren hinzugefügten Betriebsmitteln (1, 1', 1") und einem oder mehreren hinzugefügten Geräten (2, 2', 2");
- automatisches Lesen der Geräte (2, 2', 2"), die von dem Benutzer hinzugefügt wurden, und automatisches Auswählen dieser Geräte (2, 2', 2"), die mit einem Modul an dem Modulmontageort oder mit einem innerhalb des Automatisierungssystems verteilten Modul verbunden sein müssen, das Verfahren umfasst ferner:
- automatisches Bestimmen einer Anzahl von Modulen zur Installation an dem Modulmontageort basierend auf den ausgewählten Geräten (2, 2', 2");
wobei die Geräte (2, 2', 2") einen oder mehrere der Folgenden umfassen: einen Dimmer, einen Verschluss, ein steuerbares Thermostatventil, einen Ventilator, eine Lampe;
wobei die Betriebsmittel (1, 1', 1") eines oder mehrere der folgenden Betriebsmittel (1, 1', 1") umfassen: eine Einfach- oder Mehrfachsteuerung, wie eine Einfach- oder Mehrfachschaltfläche, eine Verschlusssteuerung, einen Thermostat, einen Anzeigebildschirm mit Schaltflächen, einen Sensor, einen Touchscreen, ein Smartphone;
wobei die Module für den Modulmontageort oder die innerhalb des Automatisierungssystems verteilten Module ein oder mehrere der folgenden Module umfassen: einen Steuerung, eine Stromversorgung, ein Schaltvorrichtung, ein Dimmermodul, ein Ventilatormodul, ein Heizmodul;
wobei das Erstellen der Verbindung zwischen einem oder mehreren hinzugefügten Betriebsmitteln (1, 1', 1") und einem oder mehreren hinzugefügten Geräten (2, 2', 2") das Definieren des Verhaltens eines oder mehrerer verbundenen Geräte umfasst (2, 2', 2") in Abhängigkeit von dem status des eines oder mehrerer Betriebsmittel (1, 1', 1").

2. Verfahren nach Anspruch 1, **dadurch gekennzeichnet, dass** dem Benutzer die Verknüpfungsfunktionalität zur Verfügung gestellt wird, die umfasst, einen Eingabebildschirm für die Eingabe einer oder mehrerer Bedingungen bereitzustellen, um das Verhalten zu definieren.

3. Verfahren nach einem der vorangehenden Ansprüche, ferner umfassend das Anbieten eines Eingabebildschirms an den Benutzer mit Eingabefunktionalitäten, um eine Anzahl von Modulen hinzuzufügen, die an dem Modulmontageort installiert werden sollten, und/oder um eine Verknüpfung zwischen einem hinzugefügten Modul und einem oder mehreren ausgewählten Geräten (2, 2', 2") zu erstellen.

4. Verfahren nach einem der vorangehenden Ansprüche, ferner umfassend das automatische Erstellen einer Verknüpfung zwischen einem bestimmten Modul und einem oder mehreren ausgewählten Geräten (2, 2', 2").

5. Verfahren nach einem der vorangehenden Ansprüche, das ferner die Installation der hinzugefügten Betriebsmittel (1, 1', 1") und Geräte (2, 2', 2") umfasst.

6. Verfahren nach Anspruch 5, das ferner das Installieren der Module an dem Modulmontageort basierend auf der festgelegten oder hinzugefügten Anzahl der Module und das elektrische Verbinden jedes der ausgewählten Geräte (2, 2', 2") basierend auf eine festgelegte oder hinzugefügte Verknüpfung zwischen einem Modul und einem oder mehreren ausgewählten Geräten (2, 2', 2") umfasst.

7. Verfahren nach Anspruch 6, wobei jedes Betriebsmittel (1, 1', 1") und jedes Modul über eine digitale Adresse verfügt und in der Lage ist, mit einem Regler an dem Modulmontageort oder mit einem innerhalb des Automatisierungssystems verteilten Regler mittels eines Kommunikationssystems zu kommunizieren, das ferner umfasst, einem Benutzer einen Eingabebildschirm mit Eingabefunktionalitäten auf einer Anzeige bereitzustellen, um die Betriebsmittel (1, 1', 1") und Module einzufügen, und um die jeweiligen digitalen Adressen zu lesen und die zur Nutzung durch den Regler gelesenen digitalen Adressen zu speichern.

8. Verfahren nach einem der vorangehenden Ansprüche, **dadurch gekennzeichnet, dass** eine Anzeige auf einem Eingabebildschirm mit Eingabefunktionalitäten an einen Benutzer bereitgestellt wird, um eine Anzahl von Räumen des Gebäudes einzufügen, das im Grunde umfasst, eine graphische Schnittstelle bereitzustellen, wobei der Benutzer in der Lage ist, einen Grundriss des Gebäudes mit Linien und/oder Formen zu zeichnen.

9. Verfahren nach einem der vorangehenden Ansprüche, **dadurch gekennzeichnet, dass** ein Bildschirm, um Eingabefunktionen für jeden Raum durch Hinzufügen von Geräten (2, 2', 2") einerseits und von Betriebsmitteln (1, 1', 1") andererseits hauptsächlich darin besteht, die Möglichkeit bereitzustellen, um Symbole für diese Geräte (2, 2', 2") und Betriebsmittel (1, 1', 1") in dem Grundriss zu platzieren.

10. Verfahren nach Anspruch 1, wobei die Eingabefunktionalitäten, um eine Anzahl der Räume des Gebäudes virtuell einzufügen, eine graphische Schnittstelle umfasst, wobei der Benutzer in der Lage ist, einen Grundriss des Gebäudes mit Linien und/oder Formen zu zeichnen; und wobei die Möglichkeit gegeben ist, Symbole für die Geräte (2, 2', 2") und die Betriebsmittel (1, 1', 1") in dem Grundriss zu platzieren.

11. Verfahren nach Anspruch 10, **dadurch gekennzeichnet, dass** dem Benutzer die Verknüpfungsfunktionalität zur Verfügung gestellt wird, die das Bereitstellen eines Eingabebildschirms für die Eingabe einer oder mehrerer Bedingungen umfasst, um das Verhalten zu definieren.

12. Datenträger mit darauf gespeicherten Programmanleitungen, um das Verfahren nach einem der vorangehenden Ansprüche auszuführen.

## Revendications

1. Procédé de préparation ou de finalisation d'une installation d'un système d'automation dans un bâtiment ou similaire, lequel système d'automation est destiné à commander un certain nombre de dispositifs (2, 2', 2") au moyen d'un moyen de commande (1, 1', 1") et des modules sur un site d'assemblage modulaire ou distribués à l'intérieur du système d'automation, lequel procédé comprenant :
- en fournissant d'abord
l'utilisation sur un affichage destiné à un utilisateur, d'un écran d'entrée présentant des fonctionnalités d'entrée permettant d'entrer virtuellement un certain nombre de pièces du bâtiment permettant d'ajouter virtuellement à chaque pièce sur les dispositifs d'une part et d'autre part sur des moyens de commande (1, 1', 1") de ceux-ci ;
- fournissant alors
l'utilisation sur un affichage destiné à l'utilisateur, d'une fonctionnalité de liaison permettant de créer une liaison virtuelle (3, 3', 3") entre au moins un moyen de commande supplémentaire (1, 1', 1") et un ou plusieurs dispositifs ajoutés (2, 2', 2") ;
- la lecture automatique des dispositifs (2, 2', 2") ajoutés par l'utilisateur et la sélection automatique de ces dispositifs (2, 2', 2") qui doivent être connectés à un module sur le site d'assemblage modulaire ou à un module distribué à l'intérieur du système d'automation ; le procédé comprenant en outre :
- la détermination automatique d'un nombre de modules destinés à l'installation sur le site d'assemblage modulaire en fonction des dispositifs sélectionnés (2, 2', 2") ;
dans lequel les dispositifs (2, 2', 2") comprennent un ou plusieurs des éléments suivants : un gradateur, un obturateur, une vanne thermostatique pouvant être commandée, un ventilateur, une lampe ;
dans lequel les moyen de commande (1, 1', 1") comprennent un ou plusieurs des moyens de commande (1, 1', 1") suivants: une commande simple ou multiple, tel qu'un bouton simple ou multiple, une commande d'obturateur, un thermostat, un écran d'affichage avec des boutons, un capteur, un écran tactile, un téléphone intelligent ;
dans lequel les modules destinés au site d'assemblage de module ou les modules distribués à l'intérieur du système d'automation comprennent un ou plusieurs des modules suivants : un dispositif de commande, une alimentation électrique, un dispositif de commutation, un module de gradateur, un module de ventilateur, un module de chauffage;
dans lequel la création de la liaison entre un ou plusieurs moyens de commande (1, 1', 1") et un ou plusieurs dispositifs ajoutés (2, 2', 2") comprenant la définition du comportement du ou des dispositif lié (2, 2', 2") en fonction de l'état d'un ou plusieurs moyens de commande(1, 1', 1").

2. Procédé selon la revendication 1, **caractérisé en ce que** l'offre à l'utilisateur de la fonctionnalité de liaison comprend l'utilisation d'un écran d'entrée permettant l'entrée d'au moins une condition permettant de définir le comportement.

3. Procédé selon l'une quelconque des revendications précédentes, comprenant en outre l'offre à l'utilisateur d'un écran d'affichage doté de fonctionnalités d'entrée permettant d'ajouter un certain nombre de modules conçus pour être installés sur le site d'assemblage de module et/ou pour créer une liaison entre un module ajouté et au moins un dispositif sélectionné (2, 2', 2").

4. Procédé selon l'une quelconque des revendications précédentes, comprenant en outre la création automatique d'une liaison entre un module particulier et au moins un dispositif sélectionné (2, 2', 2").

5. Procédé selon l'une quelconque des revendications précédentes, comprenant en outre l'installation du moyen de commande ajoutés (1, 1', 1") et des dispositifs (2, 2', 2") ajoutés.

6. Procédé selon la revendication 5, comprenant en outre le montage des modules dans le site d'assemblage de module en fonction du nombre déterminé ou ajouté de modules et la connexion électrique de chacun des dispositifs sélectionnés (2, 2', 2") en fonction d'une liaison déterminée ou de liaisons ajoutées entre un module et au moins un dispositif sélectionné (2, 2', 2").

7. Procédé selon la revendication 6, dans lequel chaque moyen de commande (1, 1', 1") et chaque module comporte une adresse numérique et est à même de communiquer avec un dispositif de commande dans le site d'assemblage de module ou avec un dispositif de commande distribué à l'intérieur du système d'automation au moyen d'un système de communication, comprenant en outre l'utilisation sur un affichage destiné à un utilisateur d'un écran d'affichage doté de fonctionnalités d'entrée permettant d'entrer le moyen de commande (1, 1', 1") et les modules, et permettant d'extraire ses adresses numériques, et permettant de mémoriser l'extraction des adresses numériques pour un emploi par le dispositif de commande.

8. Procédé selon l'une quelconque des revendications précédentes, **caractérisé en ce que** l'utilisation sur un affichage d'un écran d'entrée de fonctionnalités d'entrée pour un utilisateur entrant un nombre de pièces du bâtiment, comprend avant tout l'utilisation d'une interface graphique où l'utilisateur est à même de dessiner un plan d'étage du bâtiment à l'aide de lignes et/ou de formes.

9. Procédé selon l'une quelconque des revendications précédentes, **caractérisé en ce qu'**un écran offrant une entrée dotée de caractéristiques d'entrée pour chaque dispositif d'ajout de chambre (2, 2', 2") d'une part et pour chaque moyen de commande (1, 1', 1") d'autre part est principalement constitué de l'utilisation de l'accès à des icônes permettant à ces dispositifs (2, 2', 2") et au moyen de commande (1, 1', 1") de se placer dans le plan d'étage.

10. Procédé selon la revendication 1, dans lequel lesdites fonctionnalités d'entrée permettant d'entrer virtuellement un nombre de pièces du bâtiment comprennent une interface graphique où l'utilisateur est à même de dessiner un plan d'étage du bâtiment à l'aide de lignes et/ou de formes ; et dans lequel la possibilité est offerte de placer des icônes destinées aux dispositifs (2, 2', 2") et au moyen de fonctionnement (1, 1', 1") sur le plan d'étage.

11. Procédé selon la revendication 10, **caractérisé en ce que** l'offre à l'utilisateur de la fonctionnalité de liaison comprend l'utilisation d'un écran d'entrée permettant l'entrée d'au moins une condition permettant de définir le comportement.

12. Support informatique où sont mémorisées des instructions permettant de mettre en oeuvre le procédé selon l'une quelconque des revendications précédentes.
